# EUROPÄISCHE PATENTSCHRIFT

(11) **EP 3 943 897 B1**
(45) Veröffentlichungstag und Bekanntmachung des Hinweises auf die Patenterteilung: **22.02.2023**
(21) Anmeldenummer: 20186791.8
(22) Anmeldetag: 20.07.2020
(51) Int. Cl.: G01G 19/414, G01G 21/28, G01G 23/38

(54) **WAAGE MIT ETIKETTENDRUCKER**
SCALE WITH LABLE PRINTER
BALANCE DOTÉE D'UNE IMPRIMANTE D'ÉTIQUETTES

(43) Veröffentlichungstag der Anmeldung: 26.01.2022
(73) Patentinhaber: Bizerba SE & Co. KG, 72336 Balingen (DE)
(72) Erfinder: HAIGIS, Jörg, 72336 Balingen (DE); DEHNER, Moritz, 72379 Hechingen-Stetten (DE)
(74) Vertreter: Manitz Finsterwald Patent- und Rechtsanwaltspartnerschaft mbB

(56) Entgegenhaltungen:
- EP-A2- 2 594 911

## Beschreibung

Die Erfindung betrifft eine Waage, insbesondere eine Ladenwaage, die mit einem Etikettendrucker ausgestattet ist.

Bei derartigen Waagen ist es bekannt, im Rahmen einer Modellreihe den Etikettendrucker entweder zusammen mit der Wägezelle der Waage und der zugehörigen Elektronik in einem - wegen des Etikettendruckers - hochbauenden Gehäuse der Waage unterzubringen, oder ein flachbauendes Gehäuse für die Wägezelle und die zugehörige Elektronik zu verwenden und den Etikettendrucker an einem Stativ, an dem eine Kunden- und/oder Bedieneranzeige befestigt ist, anzubringen. Da sich die beiden Varianten in ihrem Aufbau nicht unerheblich voneinander unterscheiden, können für die eine Variante entwickelte Bauteile nicht ohne Weiteres für die andere Variante verwendet werden, so dass die Entwicklung und Fertigung kostenintensiv ist.

Eine Waage mit den Merkmalen des Oberbegriffs des Anspruchs 1 ist aus dem Dokument EP 2 594 911 A2 bekannt.

Der Erfindung liegt die Aufgabe zugrunde, eine Waage, insbesondere Ladenwaage, anzugeben, die eine kostengünstige Entwicklung einer Modellreihe begünstigt.

Diese Aufgabe wird durch eine Waage, insbesondere Ladenwaage, mit den Merkmalen des Anspruchs 1 gelöst, und insbesondere durch eine Waage, insbesondere Ladenwaage, mit einer Waagenplattform einschließlich einer darin integrierten Wägezelle, insbesondere samt einer Elektronik zum Betrieb der Waage, einer Etikettendruckereinheit und einer Kunststoffgehäuseeinheit, wobei die Waagenplattform, die Etikettendruckereinheit und die Kunststoffgehäuseeinheit jeweils als Modul ausgebildet sind, und wobei die Etikettendruckereinheit und die Kunststoffgehäuseeinheit seitlich nebeneinander liegend angeordnet sind und gemeinsam einen Unterbau für die Waagenplattform bilden, die sowohl auf der Etikettendruckereinheit als auch auf der Kunststoffgehäuseeinheit aufgesetzt ist.

Die erfindungsgemäße Waage insgesamt entspricht einer Variante mit einem hochbauenden Gehäuse. Die Waagenplattform alleine hingegen kann ein flachbauendes Gehäuse aufweisen. Aufgrund ihrer Modularität sind die Waagenplattform, die Etikettendruckereinheit und die Kunststoffgehäuseeinheit entlang definierter Stellen zusammengesetzt. Die Waagenplattform kann daher ohne Weiteres auch in einer Variante verwendet werden, bei der der Etikettendrucker an einem Stativ für eine Kunden- und/oder Bedieneranzeige angebracht ist. Hierdurch können die Entwicklungskosten für eine Modellreihe gesenkt werden. Die Kunststoffgehäuseeinheit, die kostengünstig herstellbar ist und letztlich nur dafür da ist, bei der hochbauenden Variante die Bauhöhe der unter der einen Seite der Waagenplattform angeordneten Etikettendruckereinheit auszugleichen und die andere Seite der Waagenplattform zu unterbauen, um eine waagerechte Aufstellung der Waage zu gewährleisten, kann für die kleinbauende Variante einfach weggelassen werden. Die Etikettendruckereinheiten der beiden Varianten können gleich oder voneinander verschieden sein.

Insbesondere weist die Waage, insbesondere Ladenwaage, eine Anzeigeneinheit für einen Bediener und/oder eine Anzeigeeinheit für einen Kunden auf. Es kann eine Adaptereinheit vorgesehen sein, über die die Anzeigeeinheit für einen Bediener und/oder die Anzeigeeinheit für einen Kunden an der Waagenplattform befestigt ist. Es kann vorgesehen sein, dass die Etikettendruckereinheit und die Kunststoffgehäuseeinheit nur mittelbar, über die Waagenplattform, fest miteinander verbunden sind. Darüber hinaus können die Etikettendruckereinheit und die Kunststoffgehäuseeinheit jeweils mit zwei, insbesondere genau zwei, höhenverstellbaren Stellfüßen versehen sein. Insbesondere umfasst die Elektronik zum Betrieb der Waage eine Auswerteeinheit, die dazu ausgelegt ist, ein Wägesignal der Wägezelle in ein Gewicht umzuwandeln, und insbesondere eine Steuereinheit, die dazu ausgelegt ist, die Anzeigeeinheit für einen Bediener und/oder die Anzeigeeinheit für einen Kunden und die Etikettendruckereinheit anzusteuern, um das Gewicht zusammen mit einem zugehörigen Preis auf der Anzeigeeinheit für einen Bediener und/oder der Anzeigeeinheit für einen Kunden anzuzeigen und auf ein Etikett eines in die Etikettendruckereinheit eingelegten Etikettenbands zu drucken.

Die Kunststoffgehäuseeinheit weist eine zumindest teilweise, insbesondere dreiseitig oder zumindest dreiseitig, umlaufende Gehäuseaußenwand und einen Gehäuseboden auf, wobei im Inneren der Kunststoffgehäuseeinheit eine Versteifungsstruktur vorgesehen ist, die die Gehäuseaußenwand von innen versteift. Wie vorstehend erläutert ist, besitzt die Kunststoffgehäuseeinheit lediglich den Zweck, einen Teil des Unterbaus für die Waagenplattform zu bilden, der bevorzugt jedoch möglichst leicht ausgebildet und günstig sein soll. Dies kann durch eine Gehäuseaußenwand mit lediglich geringer Wandstärke erreicht werden. Um dabei gleichwohl eine ausreichende Bauteilsteifigkeit gewährleisten zu können, kann die vorgenannte Versteifungsstruktur vorgesehen sein.

Die Versteifungsstruktur weist zwei sich von dem Gehäuseboden jeweils vertikal nach oben erstreckende Stützen auf, wobei die Gehäuseaußenwand, der Gehäuseboden und die Stützen einstückig als ein gemeinsames Spritzgussbauteil ausgebildet sind, und wobei die beiden Stützen jeweils von der Gehäuseaußenwand beabstandet sind und eine separat ausgebildete, insbesondere flache, Strebe, insbesondere aus Kunststoff, insbesondere fest, halten, die innen an der Gehäuseaußenwand anliegt. Die Herstellung durch ein Spritzgussverfahren ist kostengünstig. Zur Erhöhung der Bauteilsteifigkeit ist es bei Spritzgussbauteilen bekannt, an den Wänden Versteifungsrippen vorzusehen, die jedoch eine Materialanhäufung darstellen, so dass es beim Abkühlen der Schmelze dort zu einer verstärkten Volumenkontraktion kommt. Dies kann sich in einem als Durchscheinen der Rippen an der gegenüberliegenden Oberfläche bekannten Phänomen bemerkbar machen kann, was häufig als Qualitätsmangel angesehen wird. Durch die Verwendung eines separaten Bauteils in Form einer Strebe, die von innen an der Gehäuseaußenwand anliegt, kann ein derartiges Durchscheinen vermieden werden.

Um eine besonders wirksame Versteifung der Gehäuseaußenwand zu erreichen, kann sich die Strebe in horizontaler Richtung erstrecken und/oder kann die Strebe im Bereich der oberen Hälfte, bevorzugt der oberen 30%, besonderes bevorzugt der oberen 10%, der Höhe der Gehäuseaußenwand angeordnet sein. Alternativ oder zusätzlich kann die Strebe über ihre gesamte Längserstreckung oder zumindest 80% hiervon, insbesondere mit einer geraden Kante, an einer, insbesondere ebenen, Seite der Gehäuseaußenwand anliegen. Darüber hinaus kann vorgesehen sein, dass die Strebe in Umfangsrichtung der Gehäuseaußenwand entlang einer Seite der Gehäuseaußenwand verläuft, wobei die Länge der Strebe einen Wert aufweist, der wenigstens 50%, insbesondere wenigstens 70%, der Abmessung der Seite in Umfangsrichtung beträgt.

Bevorzugt ist vorgesehen, dass die Stützen an ihrem freien Ende jeweils ein Plateau aufweisen, auf dem die Strebe, insbesondere mit einer ihrer Flachseiten, aufliegt. Die Plateaus sind für eine Montage der Strebe einfach zugänglich. Darüber hinaus kann hiermit erreicht werden, dass die Strebe möglichst weit von dem Gehäuseboden entfernt angeordnet ist, wodurch eine besonders wirksame Versteifung der Gehäuseaußenwand erreicht werden kann.

Zur besonders sicheren Halterung der Strebe an den Stützen kann die Strebe jeweils über eine Zapfenverbindung an den Stützen befestigt sein, wobei hierzu die Strebe an ihren beiden Enden jeweils ein Befestigungsloch aufweist und die Stützen an ihrem freien Ende jeweils einen in Richtung der Längserstreckung der Stützen von dem jeweiligen Plateau vorspringenden Zapfen, der in ein jeweiliges Befestigungsloch der Strebe, insbesondere form- und/oder kraftschlüssig, eingreift, aufweisen.

Dabei kann das jeweilige Befestigungsloch mehrere nach innen vorspringende Klemmabschnitte aufweisen, wobei bevorzugt der jeweilige Zapfen einen Querschnitt aufweist, der in einem Abschnitt, der mit einem längeren der Klemmabschnitte zusammenwirkt, von einer Kreisform abweicht. Über die Klemmabschnitte kann die jeweilige Haltekraft zwischen der Strebe und der jeweiligen Stütze, und insbesondere die Lage der Strebe relativ zu der Gehäuseaußenwand, exakt vorgegeben und bei Bedarf bei lediglich geringfügiger Änderung der zugrundeliegende Spritzgussform einfach angepasst werden.

Vorzugsweise sind die Zapfen an den Plateaus jeweils außermittig, in Richtung des Abschnitts der Gehäuseaußenwand, an dem die Strebe anliegt, versetzt, angeordnet. Hierdurch kann die Strebe näher an die Gehäuseaußenwand herangerückt werden, so dass die Breite der Strebe gering gehalten werden kann.

Darüber hinaus ist es bevorzugt, wenn in das freie Ende des jeweiligen Zapfens eine Schraubenmutter eingespritzt ist, über die die Waagenplattform mit der Kunststoffgehäuseeinheit verschraubt ist. Durch das Einspritzen der Schraubenmuttern kann auf einfache Art die Möglichkeit des Anschraubens der Waagenplattform an der Kunststoffgehäuseeinheit geschaffen werden.

Der Querschnitt der Stützen kann sich in Richtung des freien Endes jeweils verjüngen. Dies ist insbesondere in fertigungstechnischer Hinsicht beim Spritzgussverfahren von Vorteil.

Nach einer weiteren bevorzugten Ausführungsform sind wenigstens vier derartige Stützen und wenigstens zwei derartige Streben vorgesehen sind, wobei die beiden Streben an zwei einander gegenüberliegenden Seiten der Kunststoffgehäuseeinheit jeweils an der Gehäuseaußenwand anliegen. Die Gehäuseaußenwand kann damit nicht nur an einer Seite der Kunststoffgehäuseeinheit versteift werden, sondem an zwei einander gegenüberliegenden Seiten, wodurch die Steifigkeit der Kunststoffgehäuseeinheit insgesamt zunimmt.

Außerdem kann vorgesehen sein, dass die Kunststoffgehäuseeinheit innen am Gehäuseboden eine teilhohe, insbesondere gitterförmige, Innenwandstruktur aufweist, um den Gehäuseboden zu versteifen. Hier sind verschiedene Konstruktionen der Innenwandstruktur denkbar.

Weitere vorteilhafte Ausgestaltungen der Erfindung sind in den abhängigen Ansprüchen, der Figurenbeschreibung und der Zeichnung beschrieben.

Die Erfindung wird nachfolgend beispielhaft unter Bezugnahme auf die Zeichnung beschrieben. Es zeigen,
- Fig. 1A, B: zwei Varianten einer Waage, insbesondere Ladenwaage, gemäß dem Stand der Technik in schematischer Darstellung,
- Fig. 2A,: B eine erfindungsgemäße Waage, insbesondere Ladenwaage, sowie eine nicht erfindungsgemäße Variante hiervon,
- Fig. 3A, B: die beiden Waagen gemäß den Fig. 2A und 2B jeweils in einer Explosionsdarstellung in einer Rückansicht,
- Fig. 4: eine Kunststoffgehäuseeinheit der Waage gemäß Fig. 2A in Einzeldarstellung (ohne Streben) in einer perspektivischen Ansicht,
- Fig. 5A, B: die Kunststoffgehäuseeinheit gemäß Fig. 4 mit und ohne Streben jeweils in einer Draufsicht,
- Fig. 6A, B: eine vergrößerte Darstellung der Kunststoffgehäuseeinheit gemäß den Fig. 5A und 5B im Bereich einer Stütze, und
- Fig. 7A, B: die Stütze gemäß den Fig. 6A und 6B in einer Seitenansicht.

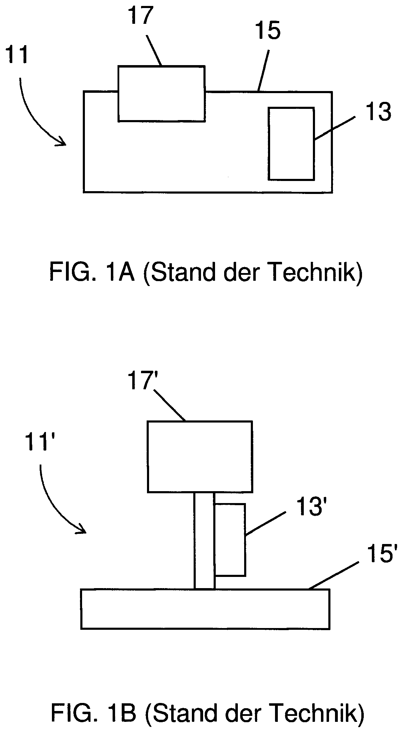

In Fig. 1 sind zwei Varianten einer bekannten Waage 11, 11', insbesondere Ladenwaage, einer Modellreihe schematisch dargestellt. Bei der Variante gemäß Fig. 1A ist ein Etikettendrucker 13 in einem hochbauenden Gehäuse 15 der Waage 11 integriert, in dem auch die Wägezelle und die Waagenelektronik untergebracht sind. Darüber hinaus ist an dem Gehäuse 15 wenigstens eine Anzeigeeinheit 17 für einen Bediener und/oder einen Kunden angebracht. Bei der Variante gemäß Fig. 1B ist lediglich ein flachbauendes Gehäuse 15' für die Wägezelle und die Elektronik vorgesehen, und ein Etikettendrucker 13' ist an einem Stativ für eine Kunden- und/oder Bedieneranzeige 17' befestigt. Die beiden Varianten besitzen keine Gleichteile.

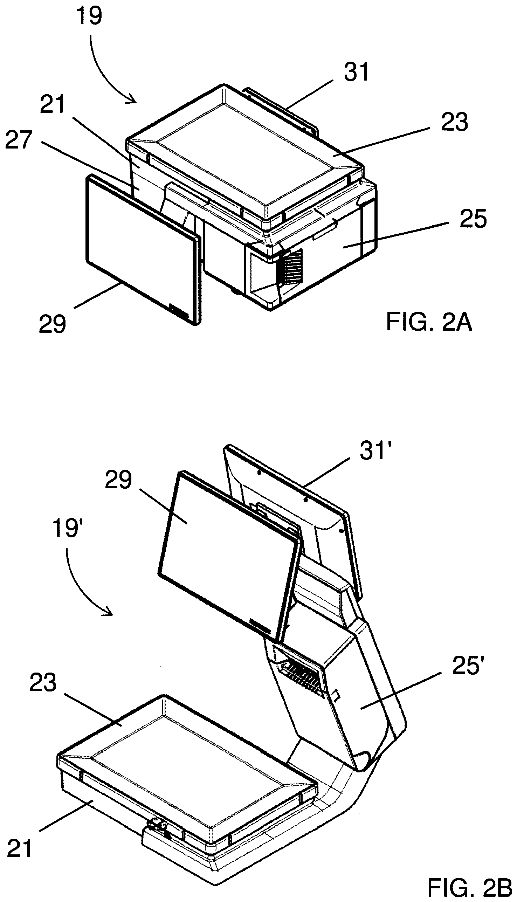

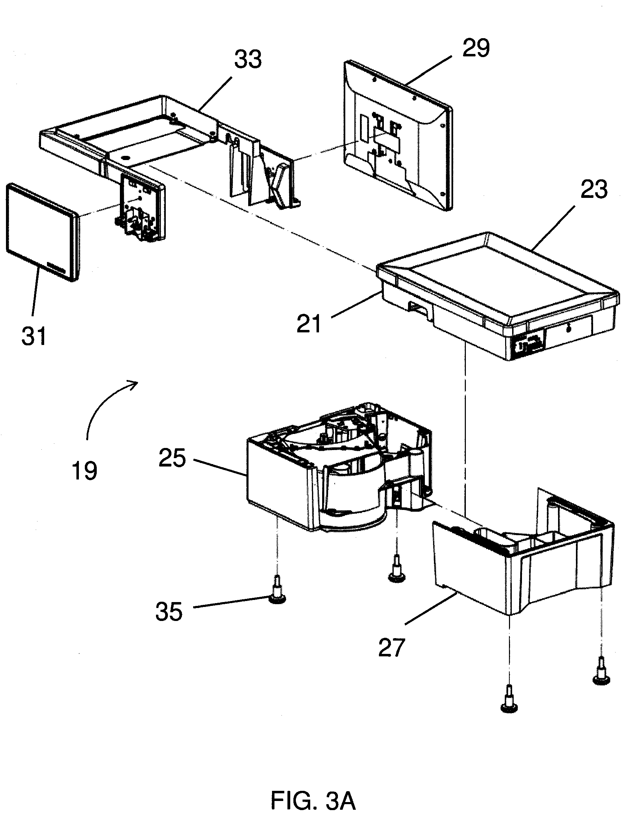

In den Fig. 2A und 3A ist eine erfindungsgemäße Waage 19, insbesondere Ladenwaage, dargestellt. Die Waage 19 umfasst eine Waagenplattform 21 mit einer Lastplatte 23, eine Etikettendruckereinheit 25, eine Kunststoffgehäuseeinheit 27, eine Anzeigeeinheit 29 für einen Bediener, eine Anzeigeeinheit 31 für einen Kunden sowie eine Adaptereinheit 33, um die beiden Anzeigeeinheiten 29, 31 an der Waagenplattform 21 anzubringen. Die Waagenplattform 21, in der die Wägezelle und die Elektronik zum Betrieb der Waage 11, d.h. eine Auswerteelektronik für das Wägesignal der Wägezelle und eine Steuereinheit zur Ansteuerung der Etikettendruckereinheit 25 und der beiden Anzeigeeinheiten 29, 31, integriert sind, die Etikettendruckereinheit 25 und die Kunststoffgehäuseeinheit 27 sowie die beiden Anzeigeeinheiten 29, 31 sind jeweils als ein Modul ausgebildet. Die Etikettendruckereinheit 25 und die Kunststoffgehäuseeinheit 27 sind dabei seitlich nebeneinander liegend angeordnet. Die Etikettendruckereinheit 25 und die Kunststoffgehäuseeinheit 27 sind nicht direkt fest miteinander verbunden, sondern jeweils mit der Waagenplattform 21 verschraubt.

Zusammen bilden die Etikettendruckereinheit 25 und die Kunststoffgehäuseeinheit 27 einen Unterbau, auf dem die Waagenplattform 21 aufgesetzt ist. Die Waagenplattform 21 liegt dabei teilweise auf der Etikettendruckereinheit 25 und teilweise auf der Kunststoffgehäuseeinheit 27 auf. Die Etikettendruckereinheit 25 ist unterhalb der Waagenplattform 21 angeordnet. In die Etikettendruckereinheit 25 und die Kunststoffgehäuseeinheit 27 werden jeweils zwei Stellfüße 35 eingeschraubt, um die Waage 19 waagerecht ausrichten zu können.

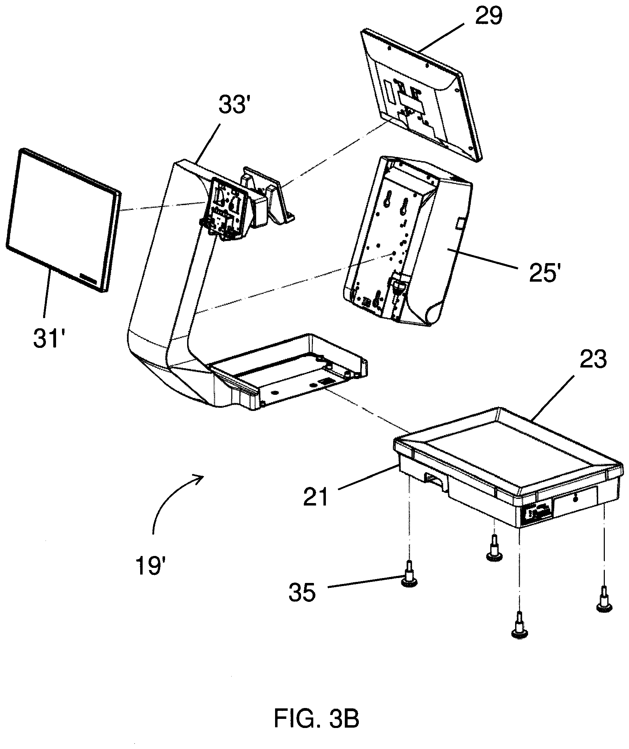

Die Waagenplattform 21 der Waage 19 kann unverändert in einer Variante der Waage 19 verwendet werden, und zwar in der in den Fig. 2B und 3B darstellten Waage 19'. Eine Etikettendruckereinheit 25' ist dabei oberhalb der Waagenplattform 21, an einem Stativ, angeordnet. Das Stativ bildet dabei eine Adaptereinheit 33', über die die beiden Anzeigeeinheiten 29, 31' an der Waagenplattform 21 angebracht sind. Die Stellfüße 35 werden bei dieser Variante direkt in die Waagenplattform 21 eingeschraubt. Die Waagenplattform 21 kann damit als Gleichteil für beide Waagen-Varianten 19, 19' verwendet werden. Dies gilt im Übrigen auch für die beiden Anzeigeeinheiten 29, 31, wobei in der gezeigten Ausführungsform lediglich die Anzeigeneinheit 29 für einen Bediener gleich ist, die Anzeigeeinheit 31' für einen Kunden jedoch etwas größer ist.

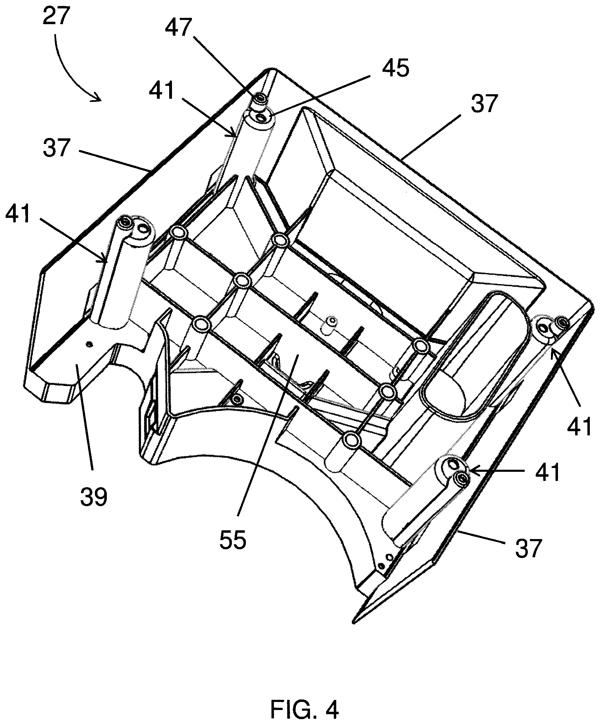

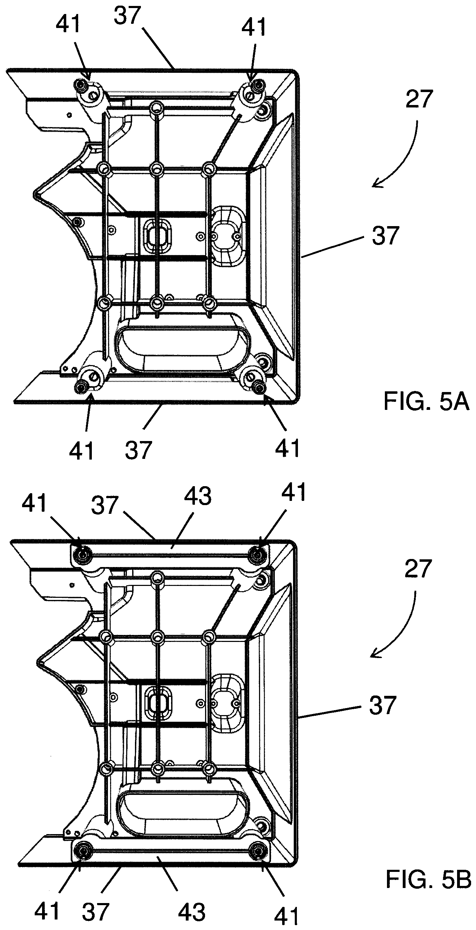

Wie sich aus den Fig. 4, 5A und 5B ergibt, besitzt die Kunststoffgehäuseeinheit 27 der Waage 19 eine dreiseitig umlaufende Gehäuseaußenwand 37 und einen Gehäuseboden 39, wobei die drei Seiten der Gehäuseaußenwand 37 jeweils eben und geringfügig gegen die Vertikale gekippt ausgebildet sind. Die Höhe der Gehäuseaußenwand 37 beträgt in der dargestellten Ausführungsform von außen betrachtet ca. 12 cm und von innen betrachtet ca. 10 cm. Da die Gehäuseaußenwand 37 aus Kosten- und Gewichtsgründen lediglich eine geringe Wandstärke von ca. 3 mm aufweist, ist im Inneren der Kunststoffgehäuseeinheit 27 eine Versteifungsstruktur vorgesehen ist, die die Gehäuseaußenwand 37 von innen versteift.

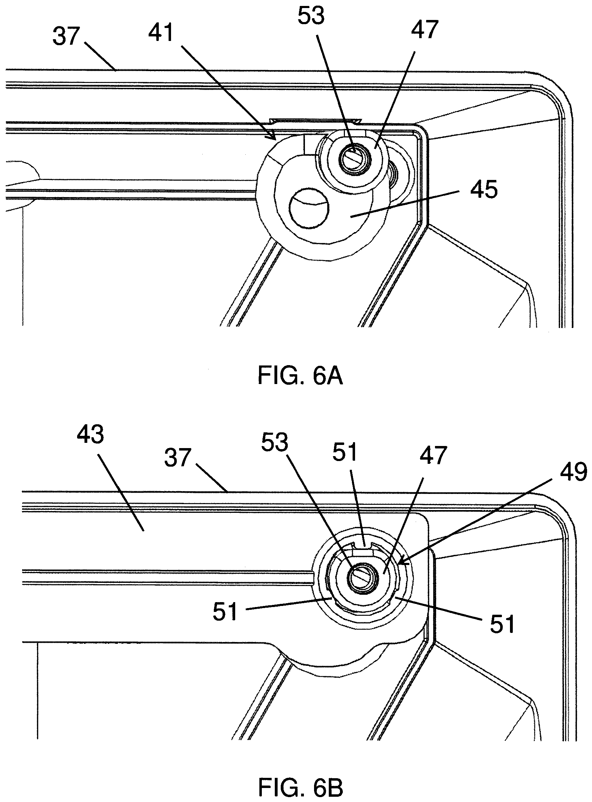

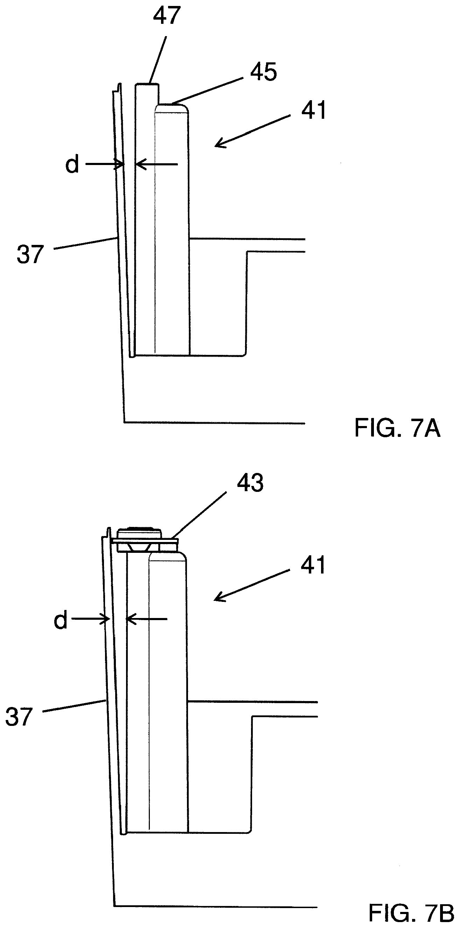

Die Versteifungsstruktur umfasst an zwei einander gegenüberliegende Seiten der Kunststoffgehäuseeinheit 27 jeweils zwei sich von dem Gehäuseboden 39 vertikal nach oben erstreckende Stützen 41, die jeweils nach innen von der Gehäuseaußenwand 37 beabstandet angeordnet sind (vgl. die Fig. 6A, 7A und 7B) und deren Querschnitt sich in Richtung des freien Endes jeweils verjüngt (vgl. die Fig. 7A und 7B), so dass der Abstand d zwischen den Stützen 41 und der Gehäuseaußenwand von unten nach oben etwas zunimmt. Der Abstand d beträgt in der dargestellten Ausführungsform unten ca. 2 mm und oben ca. 6 mm. Die Stützen 41 bilden zusammen mit der Gehäuseaußenwand 37 und dem Gehäuseboden 39 ein einstückiges Spritzgussbauteil. Die beiden Stützen 41 an einer jeweiligen Seite der Kunststoffgehäuseeinheit 27 halten dabei jeweils eine separat ausgebildete, flache Strebe 43 aus Kunststoff. Die Streben 43 liegen jeweils über ihre gesamte Länge und mit einer geraden Kante innen und damit versteifend an der Gehäuseaußenwand 37 an (vgl. die Fig. 5B, 6B und 7B). Ein Durchscheinen der Versteifungsstruktur, wie es bei spritzgegossenen Versteifungsrippen der Fall sein kann, kann damit ausgeschlossen werden.

Die freien Enden der Stützen 41 sind jeweils als ein Plateau 45 ausgebildet, auf denen die Streben 43 mit ihren Flachseiten aufliegen. Die Plateaus 45 liegen ca. 9 cm über dem Gehäuseboden 39. Um die Streben 43 an den Stützen 41 zu befestigen, steht von dem Plateau 45 in Richtung der Längserstreckung der Stütze 41 jeweils ein ca. 1 cm langer Zapfen 47 ab, der in ein jeweiliges, in der jeweiligen Strebe 43 ausgebildetes Befestigungsloch 49 eingreift. Um eine form- und kraftschlüssige Verbindung zu erreichen, weist das Befestigungsloch 49 drei nach innen vorspringende Klemmabschnitte 51 auf. Einer der Klemmabschnitte 51 ist im Vergleich zu den beiden anderen Klemmabschnitten 51 etwas länger ausgebildet. Zusätzlich weist der Zapfen 47 einen unrunden Querschnitt mit einer Abflachung auf, mit der der längere Klemmabschnitt 51 zusammenwirkt. Hierdurch kann die Haltekraft und die Lage der Strebe 43 relativ zu der Gehäuseaußenwand 37 exakt vorgegeben werden.

Die Zapfen 47 stehen von den Plateaus 45 jeweils außermittig ab. Die Zapfen 47 sind dabei in Richtung des jeweiligen Abschnitts der Gehäuseaußenwand 37, an dem die jeweilige Strebe 43 anliegt, versetzt angeordnet. In die Zapfen 47 ist jeweils eine Schraubenmutter 53 eingespritzt, über die die Waagenplattform 21 mit der Kunststoffgehäuseeinheit 27 verschraubt werden kann. Durch die Position der Zapfen 47 kann die Position der Schraubbefestigungen zwischen der Waagenplattform 21 und der Kunststoffgehäuseeinheit 27 vorgegeben werden.

Wie sich aus den Fig. 5B, 6B und 7B ersichtlich ist, erstrecken sich die beiden Streben 43 jeweils in horizontaler Richtung in Umfangsrichtung entlang einer der beiden einander gegenüberliegenden Seiten der Kunststoffgehäuseeinheit 27. Die beiden Streben 43 befinden sich dabei am oberen Ende der Gehäuseaußenwand 37, wobei sich die Streben 43 jeweils über mehr als 50% der Abmessung der jeweiligen Seite der Gehäuseaußenwand 37 in Umfangsrichtung erstrecken. Durch diese Ausbildung kann eine gute Versteifung der Gehäuseaußenwand 37 erreicht werden.

Darüber hinaus weist die Kunststoffgehäuseeinheit 27 innen, am Gehäuseboden 39 eine Innenwandstruktur 55 auf, um den Gehäuseboden 39 zu versteifen. Die Innenwandstruktur 55 umfasst längs- und quer verlaufende Innenwände, die jedoch lediglich teilhoch ausgebildet sind, d.h. die im Vergleich zu der Gehäuseaußenwand 37 eine geringere Höhe aufweisen.

### Bezugszeichenliste

- 11, 11': Waage
- 13, 13': Etikettendrucker
- 15, 15': Gehäuse
- 17, 17': Anzeigeeinheit
- 19, 19': Waage
- 21: Waagenplattform
- 23: Lastplatte
- 25, 25': Etikettendruckereinheit
- 27: Kunststoffgehäuseeinheit
- 29: Anzeigeeinheit
- 31, 31': Anzeigeeinheit
- 33, 33': Adaptereinheit
- 35: Stellfuß
- 37: Gehäuseaußenwand
- 39: Gehäuseboden
- 41: Stütze
- 43: Strebe
- 45: Plateau
- 47: Zapfen
- 49: Befestigungsloch
- 51: Klemmabschnitt
- 53: Schraubenmutter
- 55: Innenwandstruktur
- d: Abstand

## Patentansprüche

1. Waage, insbesondere Ladenwaage, mit einer Waagenplattform (21) einschließlich einer darin integrierten Wägezelle, einer Etikettendruckereinheit (25) und einer Kunststoffgehäuseeinheit (27),
wobei die Waagenplattform (21), die Etikettendruckereinheit (25) und die Kunststoffgehäuseeinheit (27) jeweils als ein Modul ausgebildet sind,
**dadurch gekennzeichnet,**
**dass** die Etikettendruckereinheit (25) und die Kunststoffgehäuseeinheit (27) seitlich nebeneinander liegend angeordnet sind und gemeinsam einen Unterbau für die Waagenplattform (21) bilden, die sowohl auf der Etikettendruckereinheit (25) als auch auf der Kunststoffgehäuseeinheit (27) aufgesetzt ist,
**dass** die Kunststoffgehäuseeinheit (27) eine zumindest teilweise, insbesondere dreiseitig oder zumindest dreiseitig, umlaufende Gehäuseaußenwand (37) und einen Gehäuseboden (39) aufweist, wobei im Inneren der Kunststoffgehäuseeinheit (27) eine Versteifungsstruktur (41, 43) vorgesehen ist, die die Gehäuseaußenwand (37) von innen versteift, und
**dass** die Versteifungsstruktur (41, 43) zwei sich von dem Gehäuseboden (39) jeweils vertikal nach oben erstreckende Stützen (41) aufweist, wobei die Gehäuseaußenwand (37), der Gehäuseboden (39) und die Stützen (41) einstückig als ein gemeinsames Spritzgussbauteil ausgebildet sind, und wobei die beiden Stützen (41) jeweils von der Gehäuseaußenwand (37) beabstandet sind und eine separat ausgebildete, insbesondere flache, Strebe (43) halten, die innen an der Gehäuseaußenwand (37) anliegt.

2. Waage nach Anspruch 1,
**dadurch gekennzeichnet,**
**dass** sich die Strebe (43) in horizontaler Richtung erstreckt.

3. Waage nach Anspruch 1 oder 2,
**dadurch gekennzeichnet,**
**dass** die Strebe (43) im Bereich der oberen Hälfte, bevorzugt der oberen 30%, besonderes bevorzugt der oberen 10%, der Höhe der Gehäuseaußenwand (37) angeordnet ist.

4. Waage nach einem der Ansprüche 1 bis 3,
**dadurch gekennzeichnet,**
**dass** die Strebe (43) über ihre gesamte Längserstreckung oder zumindest 80% hiervon, insbesondere mit einer geraden Kante, an einer, insbesondere ebenen, Seite der Gehäuseaußenwand (37) anliegt.

5. Waage nach einem der Ansprüche 1 bis 4,
**dadurch gekennzeichnet,**
**dass** die Strebe (43) in Umfangsrichtung der Gehäuseaußenwand (37) entlang einer Seite der Gehäuseaußenwand (37) verläuft, wobei die Länge der Strebe (43) einen Wert aufweist, der wenigstens 50%, insbesondere wenigstens 70%, der Abmessung der Seite in Umfangsrichtung beträgt.

6. Waage nach einem der Ansprüche 1 bis 5,
**dadurch gekennzeichnet,**
**dass** die Stützen (41) an ihrem freien Ende jeweils ein Plateau (45) aufweisen, auf dem die Strebe (43), insbesondere mit einer ihrer Flachseiten, aufliegt.

7. Waage nach Anspruch 6,
**dadurch gekennzeichnet,**
**dass** die Strebe (43) jeweils über eine Zapfenverbindung an den Stützen (41) befestigt ist, wobei hierzu die Strebe (43) an ihren beiden Enden jeweils ein Befestigungsloch (49) aufweist und die Stützen (41) an ihrem freien Ende jeweils einen in Richtung der Längserstreckung der Stützen (41) von dem jeweiligen Plateau (45) vorspringenden Zapfen (47), der in ein jeweiliges Befestigungsloch (49) der Strebe (43), insbesondere form- und/oder kraftschlüssig, eingreift, aufweisen.

8. Waage nach Anspruch 7,
**dadurch gekennzeichnet,**
**dass** das jeweilige Befestigungsloch (49) mehrere nach innen vorspringende Klemmabschnitte (51) aufweist,
wobei bevorzugt der jeweilige Zapfen (47) einen Querschnitt aufweist, der in einem Abschnitt, der mit einem längeren der Klemmabschnitte (51) zusammenwirkt, von einer Kreisform abweicht.

9. Waage nach Anspruch 7 oder 8,
**dadurch gekennzeichnet,**
**dass** die Zapfen (47) an den Plateaus (45) jeweils außermittig, in Richtung des Abschnitts der Gehäuseaußenwand (37), an dem die Strebe (43) anliegt, versetzt, angeordnet sind.

10. Waage nach einem der Ansprüche 7 bis 9,
**dadurch gekennzeichnet,**
**dass** in das freie Ende des jeweiligen Zapfens (47) eine Schraubenmutter (53) eingespritzt ist, über die die Waagenplattform (21) mit der Kunststoffgehäuseeinheit (27) verschraubt ist.

11. Waage nach einem der Ansprüche 1 bis 10,
**dadurch gekennzeichnet,**
**dass** sich der Querschnitt der Stützen (41) in Richtung des freien Endes jeweils verjüngt.

12. Waage nach einem der Ansprüche 1 bis 11,
**dadurch gekennzeichnet,**
**dass** wenigstens vier derartige Stützen (41) und wenigstens zwei derartige Streben (43) vorgesehen sind, wobei die beiden Streben (43) an zwei einander gegenüberliegenden Seiten der Kunststoffgehäuseeinheit (27) jeweils an der Gehäuseaußenwand (37) anliegen.

13. Waage nach einem der Ansprüche 1 bis 12,
**dadurch gekennzeichnet,**
**dass** die Kunststoffgehäuseeinheit (27) innen am Gehäuseboden (39) eine teilhohe, insbesondere gitterförmige, Innenwandstruktur (55) aufweist, um den Gehäuseboden (39) zu versteifen.

## Claims

1. A scale, in particular a store scale, comprising a scale platform (21) including a load cell integrated therein, a label printer unit (25), and a plastic housing unit (27),
wherein the scale platform (21), the label printer unit (25) and the plastic housing unit (27) are each configured as a module,
**characterized in that**
the label printer unit (25) and the plastic housing unit (27) are arranged disposed laterally next to one another and together form a substructure for the scale platform (21) which is placed on both the label printer unit (25) and the plastic housing unit (27),
**in that** the plastic housing unit (27) has an outer housing wall (37) which runs around at least in part, in particular at three sides or at least at three sides, and a housing base (39), with a stiffening structure (41, 43), which stiffens the outer housing wall (37) from the inside, being provided in the interior of the plastic housing unit (27), and
**in that** the stiffening structure (41, 43) has two supports (41) which each extend vertically upwardly from the housing base (39), with the outer housing wall (37), the housing base (39) and the supports (41) being formed in one piece as a common injection molded part, and with the two supports (41) each being spaced apart from the outer housing wall (37) and holding a separately formed strut (43), in particular a flat strut (43), which contacts the outer housing wall (37) at the inside.

2. A scale in accordance with claim 1,
**characterized in that**
the strut (43) extends in a horizontal direction.

3. A scale in accordance with claim 1 or claim 2,
**characterized in that**
the strut (43) is arranged in the region of the upper half, preferably the upper 30%, particularly preferably the upper 10%, of the height of the outer housing wall (37).

4. A scale in accordance with any one of the claims 1 to 3,
**characterized in that**
the strut (43), over its total longitudinal extent or at least 80% thereof, in particular with a straight edge, contacts a side, in particular a planar side, of the outer housing wall (37).

5. A scale in accordance with any one of the claims 1 to 4,
**characterized in that**
the strut (43) extends in a peripheral direction of the outer housing wall (37) along a side of the outer housing wall (37), with the length of the strut (43) having a value which amounts to at least 50%, in particular at least 70%, of the dimension of the side in the peripheral direction.

6. A scale in accordance with any one of the claims 1 to 5,
**characterized in that**
the supports (41) each have a plateau (45) at their free ends, on which plateau (45) the strut (43), in particular with one of its flat sides, is disposed.

7. A scale in accordance with claim 6,
**characterized in that**
the strut (43) is fastened to the supports (41) via a pin connection in each case, with the strut (43) for this purpose having a respective fastening hole (49) at its two ends and the supports (41) each having a pin (47) at their free ends, said pin (47) projecting from the respective plateau (45) in the direction of the longitudinal extent of the supports (41) and engaging into a respective fastening hole (49) of the strut (43), in particular in a form-fitted and/or force-fitted manner.

8. A scale in accordance with claim 7,
**characterized in that**
the respective fastening hole (49) has a plurality of inwardly projecting clamping sections (51),
with preferably the respective pin (47) having a cross-section which differs from a circular shape in a section which cooperates with a longer one of the clamping sections (51).

9. A scale in accordance with claim 7 or claim 8,
**characterized in that**
the pins (47) are each arranged off-center at the plateaus (45), arranged offset in the direction of the section of the outer housing wall (37) which the strut (43) contacts.

10. A scale in accordance with any one of the claims 7 to 9,
**characterized in that**
a nut (53), via which the scale platform (21) is screwed to the plastic housing unit (27), is molded-in in the free end of the respective pin (47).

11. A scale in accordance with any one of the claims 1 to 10,
**characterized in that**
the cross-section of the supports (41) in each case tapers in the direction of the free end.

12. A scale in accordance with any one of the claims 1 to 11,
**characterized in that**
at least four such supports (41) and at least two such struts (43) are provided, with the two struts (43) each contacting the outer housing wall (37) at two mutually oppositely disposed sides of the plastic housing unit (27).

13. A scale in accordance with any one of the claims 1 to 12,
**characterized in that**
the plastic housing unit (27) has a partly high inner wall structure (55), in particular a grid-like inner wall structure (55), at the inside of the housing base (39) to stiffen the housing base (39).

## Revendications

1. Balance, en particulier balance de magasin, comprenant une plate-forme de balance (21) incluant à l'intérieur une cellule de pesage intégrée, une unité d'imprimante d'étiquettes (25) et une unité de boîtier en matière plastique (27),
dans laquelle la plate-forme de balance (21), l'unité d'imprimante d'étiquettes (25) et l'unité de boîtier en matière plastique (27) sont respectivement réalisées sous forme de module,
**caractérisée en ce que**
l'unité d'imprimante d'étiquettes (25) et l'unité de boîtier en matière plastique (27) sont agencées à plat latéralement l'une à côté de l'autre et forment conjointement une structure inférieure pour la plate-forme de balance (21) qui est placée aussi bien sur l'unité d'imprimante d'étiquettes (25) que sur l'unité de boîtier en matière plastique (27),
l'unité de boîtier en matière plastique (27) présente une paroi extérieure de boîtier (37) qui est circonférentielle au moins partiellement, en particulier sur trois côtés ou au moins sur trois côtés, et un fond de boîtier (39), dans laquelle il est prévu, dans la partie intérieure de l'unité de boîtier en matière plastique (27), une structure de renforcement (41, 43) qui renforce la paroi extérieure de boîtier (37) de l'intérieur, et
la structure de renforcement (41, 43) présente deux montants (41) qui s'étendent respectivement vers le haut à la verticale, dans laquelle la paroi extérieure de boîtier (37), le fond de boîtier (39) et les montants (41) sont réalisés d'un seul tenant en tant que composant commun moulé par injection, et dans laquelle les deux montants (41) sont respectivement espacés de la paroi extérieure de boîtier (37) et supportent une entretoise (43) réalisée séparément, en particulier plate, qui est en contact à l'intérieur avec la paroi extérieure de boîtier (37).

2. Balance selon la revendication 1,
**caractérisée en ce que**
l'entretoise (43) s'étend dans une direction horizontale.

3. Balance selon la revendication 1 ou 2,
**caractérisée en ce que**
l'entretoise (43) est agencée dans la zone de la moitié supérieure, de préférence des 30 % supérieurs, de toute préférence des 10 % supérieurs, de la hauteur de la paroi extérieure de boîtier (37).

4. Balance selon l'une quelconque des revendications 1 à 3,
**caractérisée en ce que**
l'entretoise (43) est, sur toute son étendue longitudinale ou sur au moins 80 % de celle-ci, en particulier avec un bord droit, en contact avec un côté, en particulier plan, de la paroi extérieure de boîtier (37).

5. Balance selon l'une quelconque des revendications 1 à 4,
**caractérisée en ce que**
l'entretoise (43) s'étend dans une direction circonférentielle de la paroi extérieure de boîtier (37) le long d'un côté de la paroi extérieure de boîtier (37), dans laquelle la longueur de l'entretoise (43) présente une valeur qui s'élève à au moins 50 %, en particulier au moins 70 %, de la dimension du côté dans la direction circonférentielle.

6. Balance selon l'une quelconque des revendications 1 à 5,
**caractérisée en ce que**
les montants (41) présentent respectivement, à leur extrémité libre, un plateau (45) sur lequel repose l'entretoise (43), en particulier avec l'un de ses côtés plats.

7. Balance selon la revendication 6,
**caractérisée en ce que**
l'entretoise (43) est fixée sur les montants (41) via une connexion à tenon, respectivement, dans laquelle l'entretoise (43) présente à cet effet un trou de fixation (49) à ses deux extrémités, respectivement, et les montants (41) présentent à leur extrémité libre, respectivement, un tenon (47) se projetant depuis le plateau (45) respectif en direction de l'étendue longitudinale des montants (41), qui s'engage dans un trou de fixation (49) respectif de l'entretoise (43), en particulier par coopération de forme et/ou de force.

8. Balance selon la revendication 7,
**caractérisée en ce que**
le trou de fixation (49) respectif présente plusieurs sections de serrage (51) se projetant vers l'intérieur, dans laquelle de préférence le tenon (47) respectif présente une section transversale qui, dans une section qui coopère avec une section de serrage (51) plus longue, diverge d'une forme circulaire.

9. Balance selon la revendication 7 ou 8,
**caractérisée en ce que**
les tenons (47) sont agencés au niveau des plateaux (45) de manière excentrée, respectivement, en direction de la section de la paroi extérieure de boîtier (37) avec laquelle l'entretoise (43) est en contact.

10. Balance selon l'une quelconque des revendications 7 à 9,
**caractérisée en ce que**
un écrou à vis (53) est moulé dans l'extrémité libre du tenon (47) respectif, écrou au moyen duquel la plate-forme de balance (21) est vissée avec l'unité de boîtier en matière plastique (27).

11. Balance selon l'une quelconque des revendications 1 à 10,
**caractérisée en ce que**
la section transversale des montants (41) se rétrécit respectivement en direction de l'extrémité libre.

12. Balance selon l'une quelconque des revendications 1 à 11,
**caractérisée en ce que**
il est prévu au moins quatre montants (41) de la sorte et au moins deux montants (43) de la sorte, dans laquelle les deux entretoises (43) sont respectivement en contact avec la paroi extérieure de boîtier (37) au niveau de deux côtés opposés de l'unité de boîtier en matière plastique (27).

13. Balance selon l'une quelconque des revendications 1 à 12,
**caractérisée en ce que**
l'unité de boîtier en matière plastique (27) présente à l'intérieur, au niveau du fond de boîtier (39), une structure de paroi intérieure (55) partiellement haute, en particulier en forme de grille, pour renforcer le fond de boîtier (39).
